# EUROPEAN PATENT SPECIFICATION

(11) **EP 1 102 429 B1**
(45) Date of publication and mention of the grant of the patent: **26.10.2005**
(21) Application number: 00118386.2
(22) Date of filing: 24.08.2000
(51) Int. Cl.: H04L 9/32, H04L 9/08

(54) **Electronic authentication system**
Elektronisches Authentifizierungssystem
Système électronique d'authentification

(30) Priority: 15.11.1999 JP 32471299
(43) Date of publication of application: 23.05.2001
(73) Proprietor: Onaya Tatsuhiro, Machida-shi, Tokyo-to (JP)
(72) Inventor: Onaya, Tatsuhiro, Machida-shi, Tokyo-to (JP)
(74) Representative: Zipse + Habersack

(56) References cited:
- US-A- 5 491 750
- US-A- 5 761 311
- US-A- 5 864 667

## Description

### Field of the Invention

This invention relates to an electronic authentication system adapted to improve an authentication reliability of sender and addressee (recipient) of electronic mail and thereby to achieve an electronic mail communication of high security.

### Description of the Related Art

The electronic authentication system of well known art includes the public key cryptosystem and the shared key cryptosystem. The public key cryptosystem has been considered as the epoch-making system suitable for communication among many and unspecified persons. The public key cryptosystem has conventionally been regarded as a considerably efficient system not only for integrity of data on communication channel so far as a possibility of so-called "impersonation" is neglected. The public key cryptosystem has been also regarded as a system being able to prevent a data leakage at a fairly high probability once the public key of a person at the other end has been confirmed.

Briefly, the public key cryptosystem is characterized by:
(1) It suffices for each user him- or herself to have a pair of keys (public key and secret key);
(2) Function to put a signature is available (Encryption based on the secret key of the user A can be decoded by anyone using the public key of the user A but said encryption can be produced only by the user A and therefore equivalent to a signature of the user A); and
(3) For communication with a user B different from the user A, encryption will be made on the basis of a public key of the user B and this encryption can be decoded only by the user B.

Such features have been emphasized and consequently the public key system has come into significantly wide use.

The shared key cryptosystem, on the other hand, has not been adopted for communication among many and unspecified persons for the reason that the keys must be shared by the users A and B communicating with each other and the keys' management is troublesome.

However, it has recently been found to be a serious misunderstanding that the public key cryptosystem is an effective system.

The total number of keys is a first problem. In the public key cryptosystem used by N users, for example, a single public key suffices for each user and therefore the total number of the keys is N. In the shared key cryptosystem, on the other hand, the number of keys which each user must have is (N - 1) corresponding to the total number of the other users. Accordingly, it has been the established theory that the total number of keys used in the shared key cryptosystem is N x (N - 1).

However, the total number of keys required for each user is really (N - 1) both in the public key cryptosystem and in the shared key cryptosystem.

In communication among N users, each user can not communicate with the other respective users unless each user has (N - 1) public keys. Each user must have, in addition to (N - 1) public keys, his or her own public key and secret key. Namely, the total number of keys which each user must have is N + 1 in the public key cryptosystem.

A second problem lies in that the public key cryptosystem allows each user to have pairs of public and secret keys as many as he or she wishes. This means that "impersonation" would be possible in this system for any one of the users.

The fact that the authentication system said to ensure a security of the communication content is really unable to avoid "impersonation" is a fatal defect in the authentication. To minimize a possibility of "impersonation" in the public key cryptosystem, a clumsy measure has conventionally taken in which each pair of sender and addressee use a single trust-worthy public key known only to this pair for mutual identification.

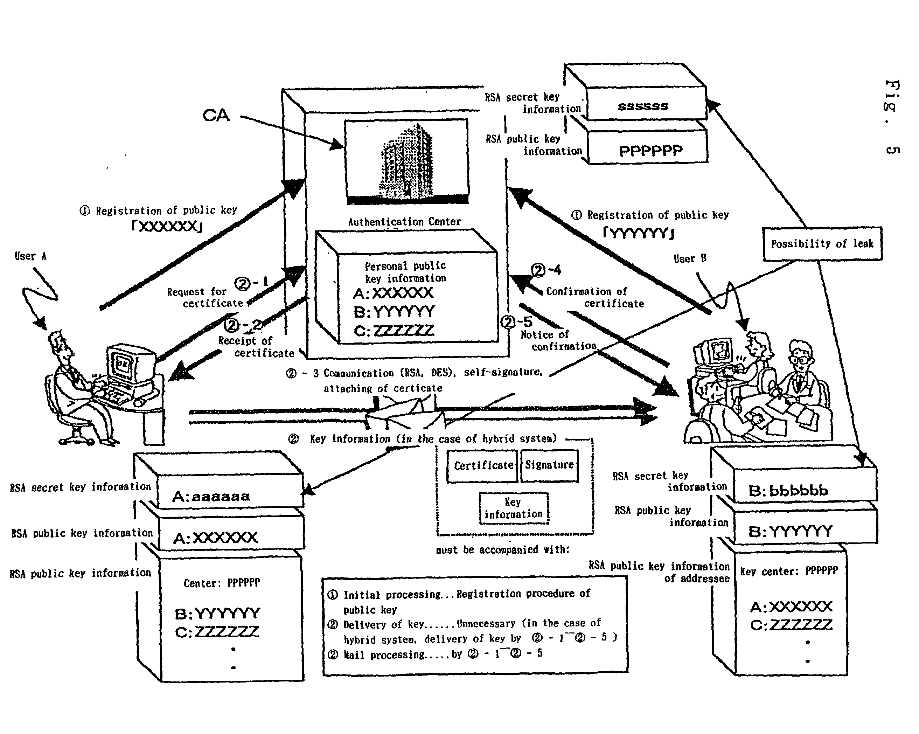

With the intention of solving the problem accompanying the public key cryptosystem of prior art, "Public Key Authentication System" has been proposed. According to this system, communication among the users is established by following procedures as will be schematically illustrated in Fig. 5 of the accompanying drawings.

In this system, users A, B possess their own public keys and secret keys (public key and secret key of the user A are designated by 'XXXXXX' and 'aaaaaa', respectively, and public key and secret key of the user B are designated by 'YYYYYY' and 'bbbbbb').

Assumed that the users other than the users A, B are commonly designated by C (possessing a public key 'ZZZZZZ'). an authentication center CA manages, in addition to the public keys registered by the respective users (the public key 'XXXXXX' of the user A, the pubic key 'YYYYYY' of the user B and the public key 'ZZZZZZ'), CA's own secret key 'ssssss' and public key 'PPPPPP' used to communicate with the respective users.

Immediately prior to communication or whenever it is desired, each sender may receive the addressee's public key and the authentication center's public key from the authentication center and encrypt a communication message using the addressee's public key. On the other hand, a cryptogram received by the addressee may be decoded using addressee's own secret key.

Referring to Fig. 5, communication among the users is established through the procedures as follow:
①. Users register their own public keys at the authentication center (The users A, B register their own public keys 'XXXXXX' and 'YYYYYY' at the authentication center CA, respectively).
② - 1. For communication among the users (For example, communication from the user A to the user B), the user A requests the authentication center CA to issue his or her ID certificate.
② - 2. Based on the request from the user A, the authentication center C issues the certificate to the user A.
② - 3. Upon receipt of the certificate, the user A attaches his or her signature and the certificate to his or her message, encrypts the message together with the key information and directly sends this cryptogram to the user B.
② - 4. Upon receipt of the message from the user A, the user B requests the authentication center CA to confirm the certificate attached to the message.
② - 5. In reply to this request, the authentication center CA will inform the user B of a confirmation that the authentication center CA has evidently issued this certificate to the user A. Informed of this confirmation, the user B can put confidence in the authentication by the authentication center CA that "the message transmitted to the user B under the name of the user A has been transmitted truly by the user A " to decode the cryptogram.

With respect to the above explained system US patent No. 5,864,667 discloses such method for a safe distribution of an encryption key including a public and a private key. To this end, the sending unit contains a stored list of secure communication partners and their respective encryption keys, wherein a secure communication is build up immediately if the addressee to which the sender wants to send his mail is contained in this security list. In case the addressee is not contained in the list an encryption key request is transmitted from the sender to the key center, whereupon the key center transmits the desired information after encryption with the inquire's public key. After these proceedings the key distribution center creates the above explained certificate including the public key for a user together with an identification information for that user and the issue date, all encrypted with the private key of the key distribution center. The method thus involves the user to present a certificate issued to him by the distribution center including an authorization for delivering a secret communication.

The body of the message is made using RSA and DES and the message from the user A to the user B takes the form of a cryptogram which has been made using the public key 'YYYYYY' of the user B. Upon receipt of the message, the user B decodes this message in the form of the cryptogram using his or her own secret key 'bbbbbb'.

For communication between the users A and B based on this authentication system of prior art, after the users A and B have registered their public keys with the authentication center CA, respectively, the users must make access to the authentication center CA for every communication in order to request the center CA to issue the certificate to be attached to the message or to confirm this certificate. On the other hand, the authentication center must intervene in every communication.

Practical operation of such "Public Key Authentication System", adequately strict procedure is required for registration of the public key. In fact, "impersonation" by the third person will be overlooked and a security will be basically spoiled unless the procedure for registration of the public key is flawless.

Identification of the person him- or herself on the public key registration procedure is made on the basis of identification papers such as driver's license and certificate of seal impression filed from the user. On-line procedure of registration is impossible so far as the driver's license and/or the certificate of seal impression are used as means of identification. Obviously, identification of the person him- or herself requires a procedure of registration as strict as possible. While such strict procedure of key registration appears to alleviate a possibility of 'impersonation' by the third person and to improve a security of communication, it is apprehended that this strict procedure might be accompanied with various evils.

More strict the procedure of public key registration is, a procedure of public key alteration will be correspondingly complicated and the public key will be left as it is fixed in its unaltered form for a long period. Such situation will generate an apprehension that the secret key paired with the public key might be decrypted by the third person and a secret of the key might leak.

While the public key pair is conventionally dimensioned to be sufficiently long to alleviate a risk that the secret key might be decrypted by the third person. However, a processing time increases as an exponential function of a length of the public key and as a result, an undesirable burden is imposed on the authentication center as well as the users. In spite of such burden imposed on the authentication center as well as the users, this system of prior art is neither adapted to eliminate "impersonation" by the third person nor adapted to detect such "impersonation". Therefore, it is extremely difficult for the user to detect the third person committing the "impersonation".

### SUMMARY OF THE INVENTION

In view of the problem as has been described above, it is a principal object of this invention to provide an electronic authentication system adapted to ensure a high security mail to be transmitted and received by a simplified procedure.

The object set forth above is achieved, according to this invention, by an electronic authentication method comprising a procedure of authentication registration, a procedure of sending and receiving a communication key and a procedure of sending and receiving a security mail, said authentication method being characterized by that:
said procedure of authentication registration comprises
   - registration of a personal information for authentication preset by each user him-or herself at a key center, which personal information for authentication is an information peculiar to each user; and
   - managing by the key center the personal information for authentication transmitted from each user;
said procedure of sending and receiving said communication key comprises, assumed that a sender is designated as a first user and an addressee is designated as a second user,
   - transmitting of an encrypted communication key from the first user to the key center;
   - while temporarily storing the encrypted communication key the key center communicates with the second user to confirm the personal information for authentication of the second user and
   - transmitting of the encrypted communication key from the key center to the second user, wherein
      said communication key is used by said first user to encrypt a message addressed to said second user and is used by said second user to decode the encrypted message; and
said procedure of sending and receiving a security mail comprises
   - encrypting the message by the first user by using the communication key, and
   - on-line transmitting the message from said first user directly to said second user and
   - receiving this encrypted message by said second user from said first user and
   - decoding the message by using the communication key transmitted from the key center to said second user.

In said procedure of sending and receiving said communication key, the key center relies on the registered personal information for authentication to identify the user having transmitted said communication key and the user receiving this communication key.

Communication between the user and the key center is made using the message encrypted on the basis of a DH system between the user and the key center.

Delivery of the communication key from said first user to said second user via the key center is made by a cryptogram made using the DH system between said first and second users and said key center is unable to intervene in a content of the message received by said key center from said first user and transmitted by said key center.

Once the personal information for authentication has been on-line registered at the key center, it is unnecessary for the user to make any access except when sending and receiving of the communication key, renewal of the personal information for authentication, or certificate of contents or communication history is required.

After having received the communication key of a first user, the addressee holds this communication key and uses this communication key to decode the encrypted message transmitted from said first user until said communication key is renewed.

Should the third person impersonate said first user by registering another personal information for authentication at the key center, such impersonation by said third person is revealed at once by a fact that the personal information for authentication of said first user is not warranted by the key center when said first user makes an access to the key center for the procedure of registration or the procedure of sending and receiving the security mail.

The communication key previously warranted by the key center for communication between said first user and said second user by the key center can be renewed with their mutual consent without any intervention of said key center.

The personal information for authentication peculiar to the user is in the form of digital information such as random digits being easily altered, suggesting no correlation between the particular person and the information content and thereby making it difficult to impersonate the particular person.

The object set forth above is achieved, according to this invention, by an electronic authentication system according to which a key center authenticates sender and addressee of a message, wherein said key center has a role of accepting registration of each user's personal information for authentication and managing this and a role of, assumed that a sender of a message is designated as a first user and an addressee of this message is designated as a second user, confirming the personal information for authentication of said first and second users in response to a request from said first user to deliver a communication key to said second user and then receiving said communication key from said first user and delivering this to said second user but said key center has no intervention in a content of the communication between said first user and said second user.

### BRIEF DESCRIPTION OF THE DRAWINGS

Fig. 1 is a diagram illustrating a construction of the electronic authentication system according to this invention;
Fig. 2 is a diagram illustrating a sequence of the registration procedure of authenticated information;
Fig. 3 is a diagram illustrating a sequence of the procedures of sending and receiving communication keys;
Fig. 4 is a diagram illustrating a sequence of the procedures of sending and receiving a security mail; and
Fig. 5 is a diagram illustrating the conventional authentication system based on the public key system.

### DETAILED DESCRIPTION OF THE PREFERRED EMBODIMENTS

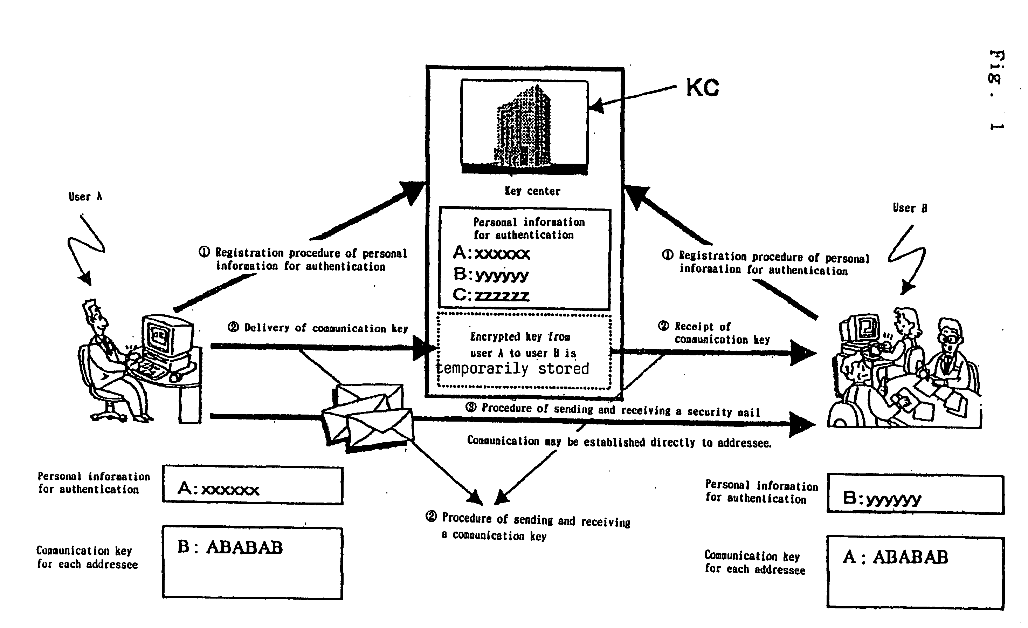

This invention will be described more in details by way of example in reference with the accompanying drawings. According to this invention, as illustrated in Fig. 1, the respective users (A, B, C,...) register their personal authentication information with a key center KC. For interpersonal communication between a first user (referred to as the user A in the description of this embodiment given hereunder) sending a message and a particular second user (referred to the user B in the description of this embodiment given hereunder), the users A, B follow ① the registration procedure of authentication information registration, ② the procedure of sending and receiving the communication keys and ③ the procedure of sending and receiving a security mail. The key center KC authenticates that the sender (user A) is evidently him- or herself.

While the key center KC in the system according to this invention is similar to the "authentication center CA" in the public key system of prior art so far as its function to authenticate the users is concerned, a term "key center" is used herein to distinguish the center according to this invention from "authentication center CA" in the public key system of prior art in view of a difference in function offered by these two systems.

The procedures followed by the system according to this invention will be sequentially described. Metaphorically to say, the key center KC in the system according to this invention the key center KC functions as a strict post office or a matchmaker, i.e., the key center KC intervenes only once in communication between the users and never intervenes in the subsequent communication between these users.

More specifically, the key center KC in the system according to this invention functions to accept a registration of user's personal information for authentication and to manage this, on one hand, and functions to receive a communication key from the user A and to deliver this to the user B, on the other hand. The key center KC is principally not concerned in a content of message exchanged between the user A and the user B except special cases.

While the key center KC accepts a registration of personal information for authentication (comparable to a certificate of seal impression), the key center KC does not use the personal public key information.

### 1. Procedure of Registering Information for Authentication:

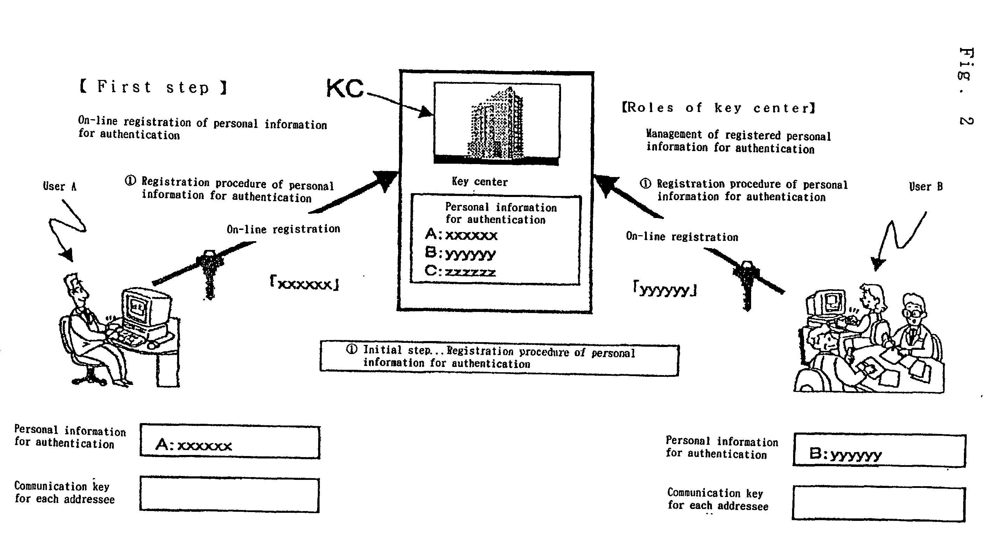

Referring to Fig. 2, the procedure of registering information for authentication ① is an initial step on which the respective users on-line register their personal information for authentication at the key center KC. On this step of registration, the respective users A, B communicate with the key center KC to register their personal information for authentication (personal information for authentication of the user A ' xxxxxx', personal information for authentication of the user B 'yyyyyy') at the key center KC. The users C other than the users A, B also register their personal information for authentication 'zzzzzz' at the key center KC.

The key center KC manages the respective personal information for authentication registered thereat. The respective users possess their personal information for authentication and the communication keys of the respective addressees (corresponding to the public keys used by the public key system of prior art). These personal information for authentication and communication keys may be optionally preset by the users so far as they meet prescribed rules.

The respective users on-line register the personal information for authentication preset by themselves at the key center KC. Specifically, the user A on-line registers his or her personal information for authentication 'xxxxxx', the user B on-line registers his or her personal information for authentication 'yyyyyy' and the users C on-line register their personal information for authentication 'zzzzzz', respectively, at the key center KC.

The users A, B, C are now free to make access to the key center KC and a further procedure is required only when a personal information for authentication is newly registered or the existing personal information for authentication is renewed or a communication key is initially delivered. A renewed personal information for authentication also may be on-line registered whenever the existing personal information for authentication is renewed.

Communication between the respective users and the key center KC is based on so-called DH system (Diffie-Hellman's key deliver system: the system allowing the users A, B to share an encrypted key (common key). This communication is made using cryptogram based on one-time password so that the registered personal information for authentication can not be monitored by the third person.

In according with this invention, information peculiar to each user is used as the personal information for authentication. A term "the information peculiar to each user" used herein should be understood to include the information which can not be known by the persons other than the person uses this particular personal information for authentication and the information which can not be used by the persons other than this particular user. A series of digits arranged at random (i.e., random digits) is an example of the former and attributes intrinsic to the individual such as a fingerprint and an iris are examples of the latter.

While the invariable information such as the fingerprint or iris can not be mimicked by the other person, it is possibly presupposed that such information is to be used as the personal information for authentication. In addition, when said fingerprint or iris is on-line registered, the data of such fingerprint or iris is inevitably converted to the corresponding digital information which can be easily copied. This means that it is difficult to prevent a leak of the secret information.

Accordingly, the digital information such as the random digits is preferably used as the personal information for authentication, which can not be easily presupposed to be used as the personal information for authentication and can be readily renewed as occasion demands.

### 2. Procedure of Sending and Receiving the Communication Key:

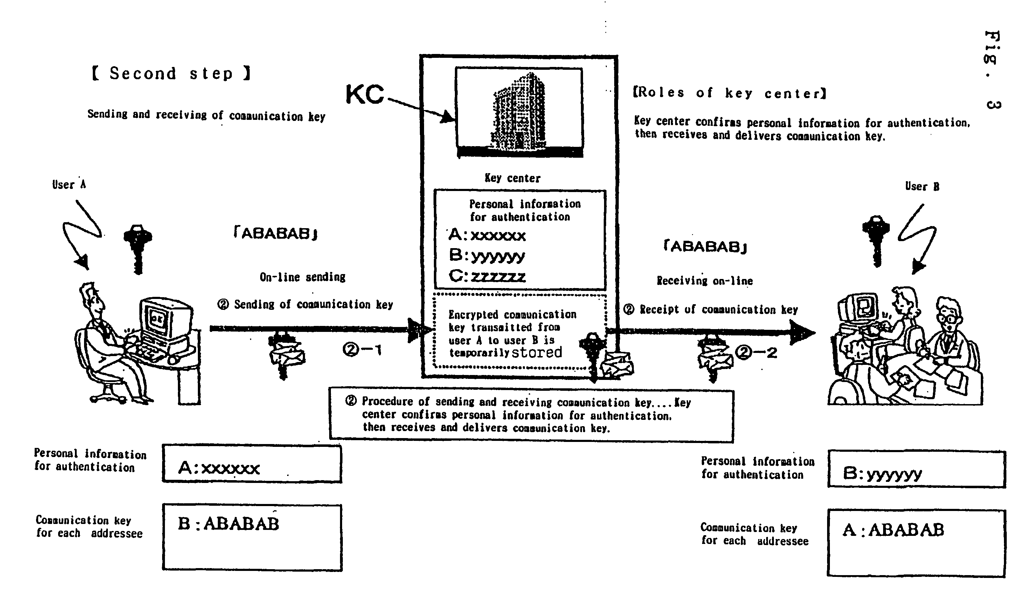

Referring to Fig. 3, the user A takes the procedure of sending the communication key (② - 1), i.e., sends (transmits) on line a communication key 'ABABAB' to be used for communication with the user B identified by the user A as an addressee to the key center KC and requests the key center KC to deliver said communication key 'ABABAB' to the user B.

The key center KC confirms the personal information for authentication 'xxxxxx' of the user A and temporarily stores the encrypted communication key 'ABABAB' transmitted by the user A to the key center KC. Then the key center KC communicates with the user B to confirm the personal information for authentication 'yyyyyy' of the user B and sends (transmits) on line the personal information for authentication of the user A to the user B (② - 2) and the user B thus obtains this communication key 'ABABAB'.

When the user B wishes to reject receipt of the communication key transmitted from the key center KC to the user B, the key center KC informs the user A of the fact that receipt of the communication key has been rejected.

This procedure is comparable to the procedure of, under authentication by the key center KC, sealing an envelope in which a letter from the user A to the user B has been put (corresponding to DH encryption between the users A, B; this is not monitored by the key center) and requesting the key center KC to deliver this sealed envelope to the user B. The communication key 'ABABAB' transmitted from the first user A to the second user B is the key encrypted in accordance with the DH system between the first user A and the second user B.

The user B may take the key (exactly to say, may make the same key) out from the sealed envelope (DH encryption). The communication between the user A or B and the key center KC is based on the DH system and encrypted by the one-time password. In this way, a leak of the communication key is prevented even against the communication monitoring. The communication key 'ABABAB' delivered by the key center KC to the user B is based on the DH system for the user B him- or herself and it is impossible even for the key center KC to falsify the communication key and/or to impersonate the user A.

The communication key 'ABABAB' received by the user B from the key center KC is trustworthy because this communication key is nothing but the communication key coming from the user A authenticated by the key center KC.

### 3. Procedure of Sending and Receiving the Security Mail:

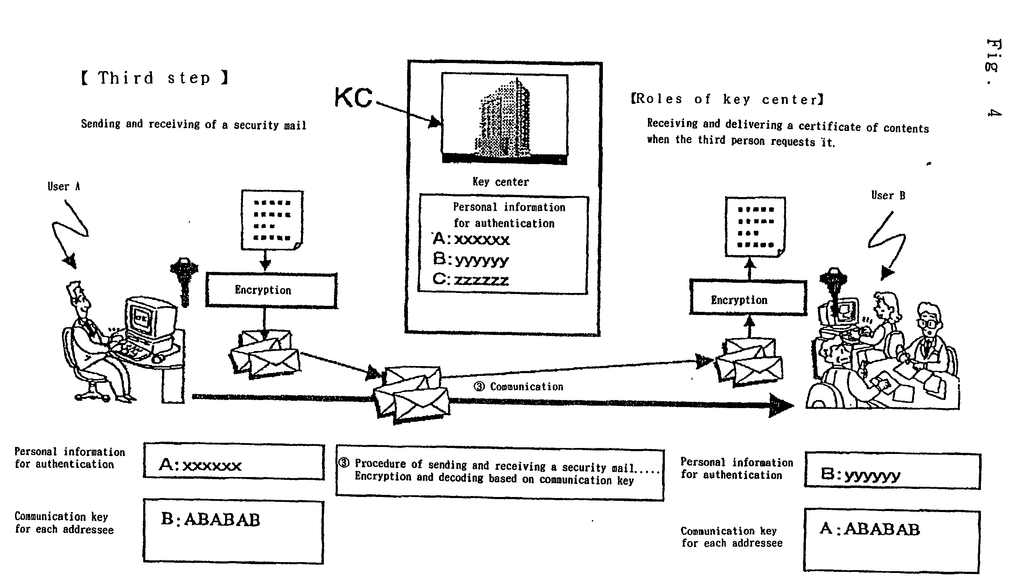

Referring to Fig. 4, the user A takes the procedure of sending and receiving the security mail (③), i.e., encrypts the message using the communication key 'ABABAB' and sends this encrypted message directly to the user B. The user B receives this. The encrypted message transmitted from the user A to the user B can be decoded using the communication key 'ABABAB' of the user A received from the key center KC, which communication key 'ABABAB' is available for communication between the user A and the user B.

The message transmitted from the user A directly to the user B on this step is the cryptogram based on the communication key 'ABABAB' delivered from the key center KC and can not be made by any person other than the user A who is the possessor of this communication key.

From the standpoint of the user B, it is confirmed that the person having transmitted the communication key 'ABABAB' enabling the encrypted message to be decoded is the user A. Thus the users A, B can use the communication key to establish their business communication without any anxiety because such communication key has a same effect as a signature and is warranted by the key center KC to be the communication key possessed by the user A. The communication key 'ABABAB' of the user A will be used for the subsequent communications from the user A to the user B. Also for communication from the user B as the first user to the user A as the second user, it is unnecessary to preset another communication key and, in this case also, the communication key 'ABABAB' can be used as the communication key so far as the communication is made between the user A and the user B.

Having obtained the communication keys of the particular users, the respective users may hold these communication keys and decode the encrypted messages transmitted from the particular users using these communication keys so long as these communication keys are not renewed.

The communication key warranted by the key center KC and having been used for communication between each pair of users may be renewed by mutual agreement without any intervention of the key center KC.

It should be understood that, when a certification of contents or a certification of communication history is necessary, the situation differs from the case of the communication key delivery. Specifically, the user may send to the key center KC an information which can be decrypted by the key center KC or a message indicating the communication history.

Should the others (third person) impersonate the user A using a personal information for authentication (e.g., 'ffffff'), the key center KC will reject the access by the true user A even when the true user A tries an access to the key center KC using his or her personal information for authentication 'xxxxxx' for the reason that said communication key 'xxxxxx' differs from the personal information for authentication 'ffffff' already registered at the key center KC as the personal information for authentication of the user A.

In other words, when the user makes an access to the key center KC to request a confirmation of his or her own personal information for authentication during the procedure of registration or sending and receiving a security mail, the user is informed of an 'impersonation' by the third person from the fact that his or her own personal information for authentication can not be warranted by the key center KC.

Strictly to say, an 'impersonation' by the third person might occur in the system according to this invention only at the initial procedure. Namely, such 'impersonation' by the third person may occur when the impersonated person has no relationship with the key center KC, i.e., such 'impersonation' may occur at the absence of the security communication by the true user or before the personal information for authentication of the true user is actually registered. However, this 'impersonation' is revealed at once when the true user makes an access to the key center KC for the security communication.

In communication between each user and the key center or among the respective users, the information stored in terminal equipment of the user as well as of the key center KC inclusive of the personal information for authentication, the communication key and the message is subjected to double encryption based on the information peculiar to the terminal equipment of the user as well as of the key center KC (hardware information) and on the information optionally preset by the user (software information). With a consequence, the information stored in these terminal equipment is that which has been subjected to said double encryption. In this way, the information stored in the respective terminal equipment are reliably protected against any wiretap or alteration. Should the information stored in the terminal equipment leak, it will be difficult the terminal equipment other than the predetermined terminal equipment to decode the information and it will be difficult for even the insiders of the key center to handle the information illegally. A security level is thus significantly improved.

### Effect of the Invention

As will be apparent from the foregoing description, this invention enables both the users and the key center to realize the authentication of user him- or herself as well as the leak-free sending and receiving of security mail by using a combination of the communication key corresponding to a modified version of the shared key system and the DH system instead of using the public key system accompanied with a relatively heavy burden. According to this invention, the user may register his or her personal information for authentication at the key center in a manner as simple as the resident registration and this registration of the personal information for authentication can be automatically done on-line.

Once the personal information for authentication has been registered, the user is obligated to make an access to the key center only for registration of renewed personal information for authentication and the initial deliver of the communication key, except special cases. Not only the users but also the key center are relieved of the burden conventionally imposed to both of them.

Furthermore, this invention enables the user to register his or her personal information for authentication at the key center on-line and additionally to renew whenever the user wishes it. This is an effect which can not be supposed from the public key system of prior art. This invention drastically reduces a possibility of the 'impersonation' by the third person and, even if such 'impersonation' occurs, such 'impersonation' by the third person can be revealed at once when the true user makes a security communication.

This invention allows the user him- or herself to control the personal information for authentication on which the security is entirely based and thereby to use the system at a high security level. Moreover, the system according this invention requires no attachment of extra information to the message and correspondingly accelerates the processing because the message of the security mail is encrypted on the basis of the system corresponding to the public key system of prior art.

### IDENTIFICATION OF REFERENCE NUMERALS USED IN THE DRAWINGS:

- KC: key center
- A, B, C: users
- xxxxxx: personal information for authentication of user A
- yyyyyy: personal information for authentication of user B
- ABABAB: communication key transmitted from user A to user B

## Claims

1. Electronic authentication method comprising a procedure of authentication registration, a procedure of sending and receiving a communication key and a procedure of sending and receiving a security mail, wherein said procedure of authentication registration comprises
- registration of a personal information for authentication preset by each user him- or herself at a key center, which personal information for authentication is an information peculiar to each user; and
- managing by the key center the personal information for authentication transmitted from each user;
said authentication method being **characterized in that** said procedure of sending and receiving said communication key comprises, assumed that a sender is designated as a first user and an addressee is designated as a second user,
- transmitting of a communication key encrypted by the Diffie-Hellman-algorithm from the first user to the key center;
- while temporarily storing the encrypted communication key the key center communicates with the second user to confirm the personal information for authentication of the second user and
- transmitting of the encrypted communication key from the key center to the second user, wherein
said communication key is used by said first user to encrypt a message addressed to said second user and is used by said second user to decode the encrypted message; and
said procedure of sending and receiving a security mail comprises
- encrypting the message by the first user by using the communication key, and
- on-line transmitting the message from said first user directly to said second user and
- receiving this encrypted message by said second user from said first user and
- decoding the message by using the communication key transmitted from the key center to said second user.

2. Electronic authentication method according to claim 1, wherein in said procedure of sending and receiving said communication key the key center relies on the registered personal information for authentication to identify the user having transmitted said communication key and the user receiving this communication key.

3. Electronic authentication method according to claim 1 or 2, wherein communication between the user and the key center is made using the message encrypted on the basis of a DH system between the user and the key center.

4. Electronic authentication method according to claim 1, 2 or 3, wherein delivery of the communication key from said first user to said second user via the key center is made by a cryptogram made using the DH system between said first and second users and said key center is unable to intervene in a content of the message received by said key center from said first user and transmitted by said key center.

5. Electronic authentication method according to one of claims 1 to 4, wherein once the personal information for authentication has been on-line registered at the key center, it is unnecessary for the user to make any access except when sending and receiving of the communication key, renewal of the personal information for authentication, or certificate of contents or communication history is required.

6. Electronic authentication method according to one of claims 1 to 5, wherein after having received the communication key of a first user, the addressee holds this communication key and uses this communication key to decode the encrypted message transmitted from said first user until said communication key is renewed.

7. Electronic authentication method according to one of claims 1 to 6, wherein, should a third person impersonate said first user by registering another personal information for authentication at the key center, such impersonation by said third person is revealed at once by a fact that the personal information for authentication of said first user is not warranted by the key center when said first user makes an access to the key center for the procedure of registration or the procedure of sending and receiving the security mail.

8. Electronic authentication method according to one of claims 1 to 7,
wherein the communication key previously warranted by the key center for communication between said first user and said second user by the key center can be renewed with their mutual consent without any intervention of said key center.

9. Electronic authentication method according to one of claims 1 to 8,
wherein the personal information for authentication peculiar to the user is in the form of digital information such as random digits being easily altered, suggesting no correlation between the particular person and the information content and thereby making it difficult to impersonate the particular person.

## Patentansprüche

1. Elektronisches Authentifizierungsverfahren umfassend einen Schritt zur Authentifizierungsregistrierung, einen Schritt des Sendens und Empfangens eines Kommunikationsschlüssels und einen Schritt des Sendens und Empfangens einer Sicherheitsmail, wobei der Schritt der Authentifizierungsregistrierung folgende Schritte umfasst:
- Registrierung einer persönlichen Authentifizierungsinformation, die von jedem Benutzer selbst an einem Schlüsselsystem voreingestellt wird, welche persönliche Authentifizierungsinformation eine Information ist, die für jeden Besucher individuell ist; und
- Handhabung der von jedem Benutzer übermittelten persönlichen Authentifizierungsinformation durch das Schlüsselzentrum;
wobei das Authentifizierungsverfahren dadurch charakterisiert ist, dass der Schritt des Sendens und Empfangens des Kommunikationsschlüssels, unter der Annahme, dass ein Sender als ein erster Benutzer und ein Adressat als ein zweiter Benutzer bezeichnet wird, folgende Schritte umfasst:
- Übersenden eines Kommunikationsschlüssels, der durch den Diffie-Hellman-Algorithmus verschlüsselt ist, von dem ersten Benutzer zum Schlüsselzentrum;
- während der verschlüsselte Kommunikationsschlüssel temporär gespeichert wird, kommuniziert das Schlüsselzentrum mit dem zweiten Benutzer, um die persönliche Authentifizierungsinformation des zweiten Benutzers zu bestätigen, und
- Übersenden des verschlüsselten Kommunikationsschlüssels vom Schlüsselzentrum zum zweiten Benutzer, wobei
der Kommunikationsschlüssel von dem ersten Benutzer verwendet wird, um eine Nachricht zu verschlüsseln, die an den zweiten Benutzer adressiert ist und von dem zweiten Benutzer verwendet wird, um die verschlüsselte Nachricht zu entschlüsseln; und
der Schritt des Sendens und Empfangens einer Sicherheitsmail folgende Schritte umfasst:
- Verschlüsseln der Nachricht durch den ersten Benutzer unter Verwendung des Kommunikationsschlüssels, und
- Onlineübertragung der Nachricht von dem ersten Benutzer direkt zum zweiten Benutzer und
- Empfangen dieser verschlüsselten Nachricht des ersten Benutzers durch den zweiten Benutzer, und
- Entschlüsseln der Nachricht durch Verwendung des Kommunikationsschlüssels, der von dem Schlüsselzentrum an den zweiten Benutzer übertragen wurde.

2. Elektronisches Authentifizierungsverfahren nach Anspruch 1, bei dem in dem Schritt des Sendens und des Empfangens des Kommunikationsschlüssels das Schlüsselzentrum auf die registrierte personelle Authentifizierungsinformation vertraut, um den Benutzer zu identifizieren, der den Kommunikationsschlüssel übertragen hat, und den Benutzer, der diesen Kommunikationsschlüssel empfängt.

3. Elektronisches Authentifizierungsverfahren nach Anspruch 1 oder 2, bei dem die Kommunikation zwischen dem Benutzer und dem Schlüsselzentrum stattfindet unter Verwendung der Nachricht, die auf der Basis eines DH-Systems verschlüsselt wurde zwischen dem Benutzer und dem Schlüsselzentrum.

4. Elektronisches Authentifizierungsverfahren nach Anspruch 1, 2 oder 3, bei dem die Abgabe des Kommunikationsschlüssels von dem ersten Benutzer an den zweiten Benutzer über das Schlüsselzentrum durch ein Kryptogramm erfolgt, welches hergestellt wurde unter Verwendung des DH-Systems zwischen dem ersten und zweiten Benutzer, und bei dem das Schlüsselzentrum nicht in der Lage ist, auf den Inhalt der Nachricht Einfluss zu nehmen, der von dem Schlüsselzentrum von dem ersten Benutzer erhalten wurde und von dem Schlüsselzentrum übermittelt wurde.

5. Elektronisches Authentifizierungsverfahren nach einem der Ansprüche 1 - 4, bei dem, sobald die persönliche Authentifizierungsinformation am Schlüsselzentrum online registriert wurde, es unnötig für den Benutzer ist, irgendeinen Zugriff zu machen, außer wenn er den Kommunikationsschlüssel sendet und empfängt, wobei die Erneuerung der persönlichen Authentifizierungsinformation oder die Zertifizierung von Inhalten oder die Kommunikationshistorie gefordert wird.

6. Elektronisches Authentifizierungsverfahren nach einem der Ansprüche 1 - 5, bei dem, nachdem der Adressat den Kommunikationsschlüssel eines ersten Benutzers empfangen hat, diesen Kommunikationsschlüssel hält und verwendet, um die verschlüsselte Nachricht, die von dem ersten Benutzer übertragen wurde, zu entschlüsseln, bis der Kommunikationsschlüssel erneuert wird.

7. Elektronisches Authentifizierungsverfahren nach einem der Ansprüche 1 - 6, bei dem, sollte eine dritte Person vorgeben, der erste Benutzer zu sein, indem er eine andere persönliche Authentifizierungsinformation an dem Schlüsselzentrum registriert, eine derartige Täuschung durch die dritte Person sofort festgestellt wird durch die Tatsache, dass die persönliche Authentifizierungsinformation des ersten Benutzers von dem Schlüsselzentrum nicht gewährt wird, wenn der erste Benutzer für den Schritt der Registrierung oder den Schritt des Sendens und Empfangens der Sicherheitsmail auf das Schlüsselzentrum zugreift.

8. Elektronisches Authentifizierungsverfahren nach einem der Ansprüche 1 - 7, bei dem der Kommunikationsschlüssel, der vorher von dem Schlüsselzentrum für die Kommunikation zwischen dem ersten Benutzer und dem zweiten Benutzer gewährt wurde, mit deren gegenseitigem Einverständnis ohne irgendeine Intervention des Schlüsselzentrums erneuert werden kann.

9. Elektronisches Authentifizierungsverfahren nach einem der Ansprüche 1 - 8, bei dem die persönliche Authentifizierungsinformation, die jedem Benutzer individuell zugeteilt wird, in der Form digitaler Information, wie z.B. Zufallszahlen, bereit gestellt wird, die leicht geändert werden kann und die keine Korrelation zwischen der bestimmten Person und dem Informationsgehalt nahe legt und es damit schwierig macht, vorzugeben, die bestimmte Person zu sein.

## Revendications

1. Procédé électronique d'authentification comprenant une procédure d'enregistrement d'authentification, une procédure d'envoi et de réception d'une clé de communication et une procédure d'envoi et de réception d'un courrier sécurisé ; ladite procédure d'authentification comprenant :
- l'enregistrement d'une information personnelle pour un préréglage d'authentification par chaque utilisateur à un centre de cryptage, laquelle information personnelle d'authentification est une information spécifique pour chaque utilisateur ; et
- la gestion par le centre de cryptage de l'information personnelle pour l'authentification transmise par chaque utilisateur ;
ledit procédé d'authentification étant **caractérisé en ce que** ladite procédure d'envoi et de réception comprend ladite clé de communication dans le cas où un émetteur est désigné en tant que premier utilisateur et un récepteur comme second utilisateur,
- la transmission d'une clé de cryptage cryptée à l'aide de l'algorithme Diffe-Hellman par le premier utilisateur au centre de cryptage ;
- tout en stockant la clé de communication cryptée, la communication par le centre de cryptage avec le second utilisateur pour la confirmation de l'information personnelle destinée à l'authentification du second utilisateur et,
- la transmission de la clé de communication cryptée à partir du centre de cryptage au second utilisateur, où
ladite clé de communication est utilisée par ledit premier utilisateur pour crypter un message adressé audit second utilisateur et est utilisée par ledit second utilisateur pour décoder le message crypté ; et
ladite procédure d'envoi et de réception d'un courrier sécurisé comprenant :
- l'encryptage du message par le premier utilisateur en utilisant la clé de communication, et
- la transmission on-line du message dudit premier utilisateur directement au second utilisateur, et
- la réception de ce message encrypté par ledit second utilisateur dudit premier utilisateur et
- le décodage du message en utilisant la clé de communication transmise par le centre de cryptage audit second utilisateur.

2. Procédé d'authentification électronique selon la revendication 1, où dans ladite procédure d'envoi et de réception de ladite clé de communication, le centre de cryptage dépend de l'information personnelle enregistrée pour l'authentification pour identifier l'utilisateur ayant transmis ladite clé de communication et l'utilisateur recevant cette clé de communication.

3. Procédé d'authentification électronique selon la revendication 1 ou 2, où la communication entre l'utilisateur et le centre de cryptage est réalisée en utilisant le message encrypté sur la base d'un système DH entre l'utilisateur et le centre de cryptage.

4. Procédé d'authentification électronique selon la revendication 1, 2 ou 3, où la transmission de la clé de communication dudit premier utilisateur audit second utilisateur via le centre de cryptage est réalisée par un cryptogramme utilisant le système DH entre lesdits premiers et seconds utilisateurs et ledit centre de cryptage étant incapable d'intervenir dans le contenu du message reçu par ledit centre de cryptage dudit premier utilisateur et transmis par ledit centre de cryptage.

5. Procédé d'authentification électronique selon la revendication 1 à 4, où il n'est pas nécessaire pour l'utilisateur dès lors que l'information personnelle destinée à l'authentification à été enregistrée on-line, de donner accès, sauf lorsqu'il envoie et reçoit la clé de communication, lorsqu'il renouvelle l'information personnelle destinée à l'authentification ou lorsqu'il est nécessaire d'avoir une confirmation des contenus ou un historique des communications.

6. Procédé d'authentification électronique selon l'une des revendication 1 à 5, où après avoir reçu la clé de communication d'un premier utilisateur, le récepteur garde cette clé de communication et utilise cette clé de communication pour décoder le message encrypté transmis par ledit premier utilisateur jusqu'à ce que ladite clé de communication est renouvelée.

7. Procédé d'authentification électronique selon n'importe laquelle des revendications 1 à 6, où si une tierce personne essaie d'usurpé l'identité dudit premier utilisateur en enregistrant une autre information personnelle pour l'authentification au centre de cryptage, une telle usurpation d'identité par ladite tierce personne sera démasquée immédiatement du fait que l'information personnelle pour l'authentification dudit premier utilisateur n'est pas garantie par le centre de cryptage lorsque ledit premier utilisateur donne accès au centre de cryptage pour effectuer la procédure d'enregistrement ou la procédure d'envoi et de réception du courrier sécurisé.

8. Procédé d'authentification électronique selon une des revendications 1 à 7, où la clé de communication auparavant est garantie par le centre de cryptage pour la communication entre ledit premier utilisateur et le second utilisateur via le centre de cryptage peut être renouvelée avec leur consentement mutuel sans aucune intervention dudit centre de cryptage.

9. Procédé d'authentification électronique selon une des revendications 1 à 8, où l'information personnelle pour l'authentification spécifique à l'utilisateur se présente sous la forme d'une information numérique comme des chiffres randomisés pouvant être facilement modifiés, n'induisant pas de lien entre la personne concernée et le contenu de l'information et rendant ainsi difficile l'usurpation de l'identité de la personne concernée.
